# EUROPEAN PATENT APPLICATION

(11) **EP 4 625 769 A1**
(43) Date of publication of application: **01.10.2025**
(21) Application number: 25165652.6
(22) Date of filing: 24.03.2025
(51) Int. Cl.: H02K 1/276, H02K 15/035, H02K 15/121, H02K 15/038

(54) **ROTOR FOR ROTARY ELECTRIC MACHINE AND METHOD FOR MANUFACTURING ROTOR FOR ROTARY ELECTRIC MACHINE**

(30) Priority: 25.03.2024 JP 2024047864
(71) Applicant: Aisin Corporation, Kariya, Aichi 448-8650 (JP)
(72) Inventor: ADACHI, Akifumi, Kariya 448-8650 (JP); YAMADA, Minami, Kariya 448-8650 (JP)
(74) Representative: Kramer Barske Schmidtchen Patentanwälte PartG mbB

(57) **Abstract**

A use amount of a magnet material is reduced and a possibility of breakage of a bonded magnet (61, 62) due to solidification and shrinkage of a bonded magnet material is reduced.

There is disclosed a rotor (30) for a rotary electric machine, the rotor including a core including a shaft center and a magnet hole (321, 322), and a magnet material portion formed by injecting an injection molding material containing a magnetic powder into the magnet hole (321, 322), in which the magnet material portion includes a magnet body (611, 621) inside the magnet hole (321, 322), and a material end outside the magnet hole (321, 322), and the material end encloses the magnet hole (321, 322) and is separated into a plurality of portions in a circumferential direction as viewed in an axial direction.

## Description

### TECHNICAL FIELD

The present disclosure relates to a rotor for a rotary electric machine and a method of manufacturing the rotor for a rotary electric machine.

### BACKGROUND DISCUSSION

A known rotor for a rotary electric machine, a method of manufacturing a rotor for a rotary electric machine is disclosed in JP H11-136888 A. In a method of manufacturing a rotor for a rotary electric machine, in order to accurately detect a boundary of poles of a permanent magnet by a position detection element, a technique is known in which a disk-shaped permanent magnet that substantially covers one end surface of a rotor core is integrally configured by a bonded magnet together with a permanent magnet in a magnet hole.

However, in a related art as described above, there is a problem that the amount of the magnet material for forming the disk-shaped permanent magnet is relatively large due to the formation of the continuous disk-shaped permanent magnet over an entire circumference. In addition, unlike common metals, a bonded magnet material has low toughness and has a significantly fragile property. Therefore, the disk-shaped permanent magnet extending over a wide range over the entire circumference is likely to be broken at various places due to the solidification and shrinkage of the disk-shaped permanent magnet.

Therefore, in one aspect, an object of the present disclosure is to reduce a use amount of a magnet material and reduce a possibility of breakage of a bonded magnet due to solidification and shrinkage of a bonded magnet material.

A need thus exists for a rotor for a rotary electric machine and a method of manufacturing a rotor for a rotary electric machine which are not susceptible to the drawing mentioned above.

### SUMMARY

One aspect provides a rotor for a rotary electric machine, the rotor including
a core including a shaft center and a magnet hole, and
a magnet material portion formed by injecting an injection molding material containing a magnetic powder into the magnet hole, in which
the magnet material portion includes
a magnet body inside the magnet hole, and
a material end outside the magnet hole, and
the material end encloses the magnet hole and is separated into a plurality of portions in a circumferential direction as viewed in an axial direction.

In one aspect, the present disclosure can reduce a use amount of a magnet material and reduce a possibility of breakage of a bonded magnet due to solidification and shrinkage of a bonded magnet material.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a sectional view schematically illustrating a sectional structure of a motor according to an embodiment;
Fig. 2 is a sectional view (a sectional view taken along a plane perpendicular to an axial direction) of a rotor;
Fig. 3 is a plan view illustrating a rotor core and a bonded magnet according to the present embodiment as viewed in an axial direction;
Fig. 4 is a sectional view schematically illustrating a part of a manufacturing apparatus suitable for use in a step of arranging (forming) the bonded magnet on the rotor core;
Fig. 5 is a perspective view illustrating a fixed die from a movable die side;
Fig. 6 is a plan view illustrating a configuration of a magnet end in a rotor according to a comparative example, and is a plan view to be compared with Fig. 3;
Fig. 7 is a sectional view of a manufacturing apparatus for manufacturing a configuration of a comparative example, and is a sectional view to be compared with Fig. 4 and Fig. 9 described later;
Fig. 8 is an explanatory diagram of a problem occurring in a comparative example, and is a sectional view schematically illustrating a mode of a deformation of a rotor core occurring in a die clamping state;
Fig. 9 is a sectional view taken along a plane passing through a central axis, and is a sectional view taken along a plane passing through a radial portion;
Fig. 10 is an explanatory diagram of a crack that can occur in a comparative example;
Fig. 11 is an explanatory diagram of solidification and shrinkage of a bonded magnet material during injection molding;
Fig. 12 is an explanatory diagram of a modification of an island; and
Fig. 13 is an explanatory diagram of another modification of the island.

### DETAILED DESCRIPTION

Hereinafter, each embodiment will be described in detail with reference to the accompanying drawings. Note that the dimensional ratios in the drawings are merely examples, and the dimensional ratios are not limited to the examples, and shapes and the like in the drawings may be partially exaggerated for convenience of description. In the drawings, only some of a plurality of portions having the same attribute may be assigned with reference signs for the sake of clarity.

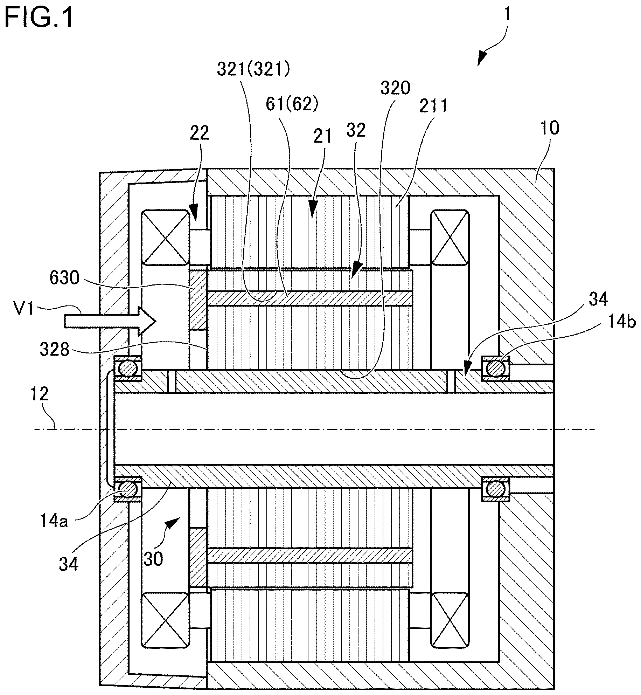

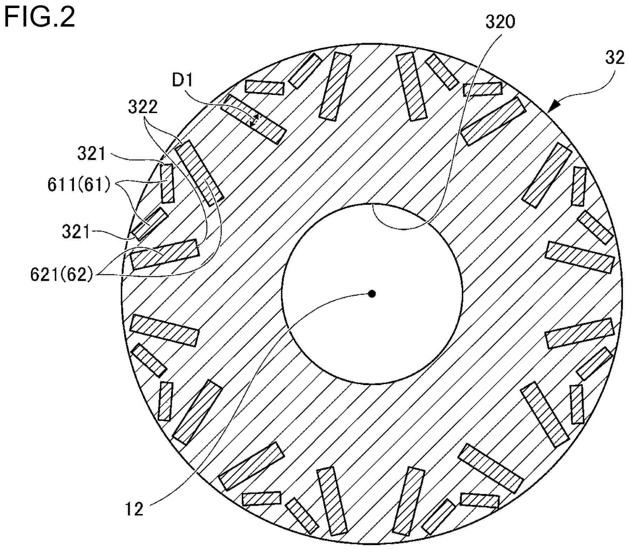

Fig. 1 is a sectional view schematically illustrating a sectional structure of a motor 1 according to an embodiment. Fig. 2 is a sectional view (a sectional view taken along a plane perpendicular to an axial direction) of a rotor 30. Note that, in Fig. 2 and the like, only some of a plurality of portions having the same attribute may be assigned with reference signs for the sake of clarity.

Fig. 1 illustrates a rotation axis 12 of the motor 1. In the following description, an axial direction refers to a direction in which the rotation axis (central axis) 12 of the motor 1 extends, and a radial direction refers to a radial direction about the rotation axis 12. Therefore, a radially outer side refers to a side away from the rotation axis 12, and a radially inner side refers to a side toward the rotation axis 12. A circumferential direction corresponds to a rotation direction about the rotation axis 12.

The motor 1 may be, for example, a motor for driving a vehicle used in a hybrid vehicle or an electric vehicle. However, the motor 1 may be used for any other application.

The motor 1 is an inner rotor type, and is provided such that a stator 21 surrounds the radially outer side of the rotor 30. The radially outer side of the stator 21 is fixed to a motor housing 10. The stator 21 includes a stator core 211 including, for example, an annular magnetic laminated steel plate, and a plurality of slots (not illustrated) around which a coil 22 is wound is formed on the radially inner side of the stator core 211.

The rotor 30 is disposed on the radially inner side of the stator 21.

The rotor 30 includes a rotor core 32, a rotor shaft 34, and bonded magnets 61 and 62.

The rotor core 32 is fixed to a surface of the radially outer side of the rotor shaft 34 and rotates integrally with the rotor shaft 34. The rotor core 32 has a shaft hole 320 (see Fig. 2) corresponding to the shaft center, and the rotor shaft 34 is fitted to the shaft hole 320. The rotor shaft 34 is rotatably supported by the motor housing 10 with bearings 14a and 14b interposed therebetween. Note that the rotor shaft 34 defines the rotation axis 12 of the motor 1.

The rotor core 32 is constituted by, for example, an annular magnetic stacked steel plate. In a modification, the rotor core 32 may be constituted by a green compact in which a magnetic powder is compressed and solidified. The bonded magnets 61 and 62 are disposed in the rotor core 32. Details of the bonded magnets 61 and 62 will be described later. For this purpose, the rotor core 32 has magnet holes 321 and 322 (see Fig. 2) penetrating in the axial direction. The magnet holes 321 and 322 are provided so as to form a set for each magnetic pole.

As illustrated in Fig. 2, the rotor core 32 is rotationally symmetric about the rotation axis 12 as viewed in the axial direction. In an example illustrated in Fig. 2, each set of magnet holes 321 and 322 overlaps each other every time the rotor core 32 rotates 45 degrees about the rotation axis 12.

Although Fig. 1 illustrates the motor 1 having a specific structure, the structure of the motor 1 is not limited to such a specific structure. For example, in Fig. 1, the rotor shaft 34 is hollow, but may be solid. Although a cross section of the rotor shaft 34 is constant along the axial direction, small diameter portions may be provided on both sides in the axial direction.

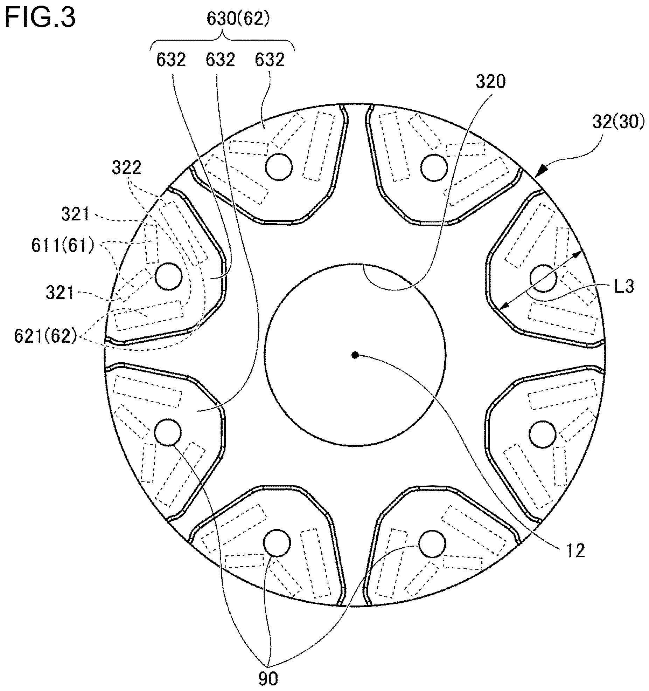

Next, the rotor core 32 and the bonded magnets 61 and 62 will be further described with reference to Fig. 3 and subsequent drawings. Fig. 3 is a plan view illustrating the rotor core 32 and the bonded magnets 61 and 62 according to the present embodiment as viewed in the axial direction (as viewed in the direction of an arrow V1 in Fig. 1). In Fig. 3, the magnet holes 321 and 322 are indicated by see-through dotted lines.

The bonded magnets 61 and 62 are formed by injection molding a material for a bonded magnet (hereinafter, also simply referred to as "bonded magnet material") obtained by mixing magnetic powder and a binding material. A method of injection molding is arbitrary, and may include, for example, transfer molding, resin injection by compression molding using a cylinder, and the like. A runner may be of any type such as a cold runner type or a hot runner type. Details of a method for forming the bonded magnets will be described with reference to a manufacturing method described later.

The bonded magnet 61 includes a magnet body 611 inside the magnet hole 321 and a magnet end 630 outside the magnet hole 321. The bonded magnet 62 includes a magnet body 621 inside the magnet hole 322 and a magnet end 630 outside the magnet hole 322.

The magnet body 611 continuously extends from one end to the other end of the magnet hole 321. The magnet body 611 is a body that contributes to torque characteristics of the motor 1. The magnet body 621 continuously extends from one end to the other end of the magnet hole 322.

In the example illustrated in Fig. 2, each pair of the magnet bodies 611 and 621 is arranged in a substantially V shape (a substantially V shape in which the radially outer side is opened) as viewed in the axial direction. In this case, a common magnetic pole is formed between the pair of magnet bodies 611 and between the pair of magnet bodies 621. The magnet bodies 611 and 621 are arranged such that S poles and N poles alternately appear in the circumferential direction. Although, in the present embodiment, the number of magnetic poles is eight, the number of magnetic poles is arbitrary.

Note that the arrangement and forms of the magnet bodies 611 and 621 are arbitrary, and other magnet bodies may be arranged on a d-axis. The example illustrated in Fig. 2 shows a two-layer structure in which the magnet body 611 constitutes a layer on the radially outer side of the magnet body 621, but the structure may be a one-layer structure or a structure with three or more layers.

The magnet end 630 is continuously formed from the magnet bodies 621 and 611. That is, the magnet end 630 is formed integrally with the magnet bodies 621 and 611. The magnet end 630 extends on an axial end surface 328 on one side in the axial direction of the rotor core 32. That is, the magnet end 630 is provided so as to cover the axial end surface 328. Note that the magnet end 630 is provided only on one side in the axial direction. Unlike the magnet body 621, the magnet end 630 is a portion that does not substantially contribute to the torque characteristics of the motor 1, and is an extra portion that is incidentally formed when the magnet body 621 is substantially formed. A technical significance of forming the magnet end 630 will be described later.

In the present embodiment, as illustrated in Fig. 3, the magnet end 630 encloses (ranges of) the magnet holes 321 and 322 and separates them into a plurality of portions in the circumferential direction as viewed in the axial direction. In an example illustrated in Fig. 3, the magnet end 630 is separated between magnetic poles adjacent in the circumferential direction. That is, the magnet end 630 is separated by a q-axis. In this case, the magnet end 630 is divided into the number ("eight" in this example) corresponding to the number of magnetic poles. Hereinafter, each part of the magnet end 630 separated in this way is also referred to as "island 632".

As described above, the plurality of bonded magnets 61 and 62 is formed by injection molding a bonded magnet material. In the present embodiment, one gate for injection molding is assigned for each island 632. In Fig. 3, a gate mark 90 is schematically indicated by a circle in each island 632. In this case, since the gate only needs to be disposed for each island 632, it is possible to reduce complication of the manufacturing apparatus and the cost as compared with a case where the gate is disposed for each of the plurality of bonded magnets 61 and 62.

The gate mark 90 of one island 632 is preferably located at or near a centroid of the island 632 as viewed in the axial direction. A technical significance of this configuration will be described later in relation to the manufacturing method. Note that near the centroid means that it is not necessary to exactly coincide with the centroid, and may be a concept including an error within 10% of a maximum dimension (for example, a maximum dimension of an outer shape as viewed in the axial direction) of the island 632, for example.

The island 632 is preferably increased in width in the radial direction at a substantially central portion in the circumferential direction (see a dimension L3 in Fig. 3) as viewed in the axial direction. For example, in a portion of a side of the outer shape of the radially inner side, a substantially central portion is recessed toward the radially inner direction. A technical significance of this configuration will be described later in relation to the manufacturing method. Here, the substantially central portion is a concept including not only an exact central portion but also a periphery of the central portion (for example, an error within 10% of a length in the circumferential direction). In the present embodiment, the exact central portion is on a line in the radial direction passing through a center of the gate mark 90.

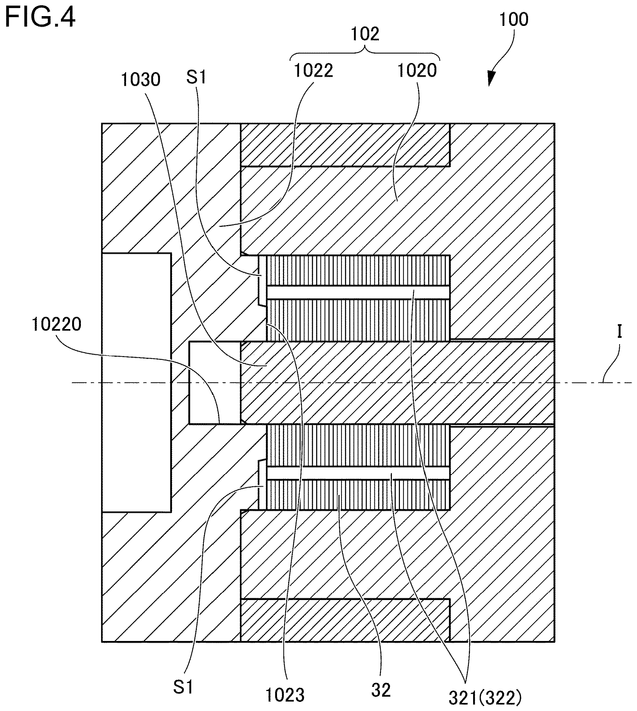

Next, a method of manufacturing the rotor 30 and a manufacturing apparatus of the rotor 30 will be described with reference to Fig. 4. Hereinafter, in the method of manufacturing the rotor 30, a step of arranging (forming) the bonded magnets 61 and 62 on the rotor core 32 will be mainly described. Other steps (for example, a step of binding the rotor core 32 and the rotor shaft 34) are arbitrary.

Fig. 4 is a sectional view schematically illustrating a part of a manufacturing apparatus 100 suitable for use in the step of arranging (forming) the bonded magnets 61 and 62 on the rotor core 32. Fig. 4 is a sectional view taken along a plane passing through the central axis I and passing through a closed space S1 described later. Fig. 4 schematically illustrates the rotor core 32 as a workpiece before the bonded magnets 61 and 62 are formed.

The manufacturing apparatus 100 includes a mold device 102. The mold device 102 can be opened and closed between a movable die 1020 and a fixed die 1022. The fixed die 1022 forms a part of an injection molding device as described later.

As illustrated in Fig. 4, the movable die 1020 holds the rotor core 32 in a centered state by a centering mechanism 1030. Fig. 4 illustrates a die clamping state in which a bonded magnet material for injection molding is injected (filled) into the magnet holes 321 and 322 from the fixed die 1022 side.

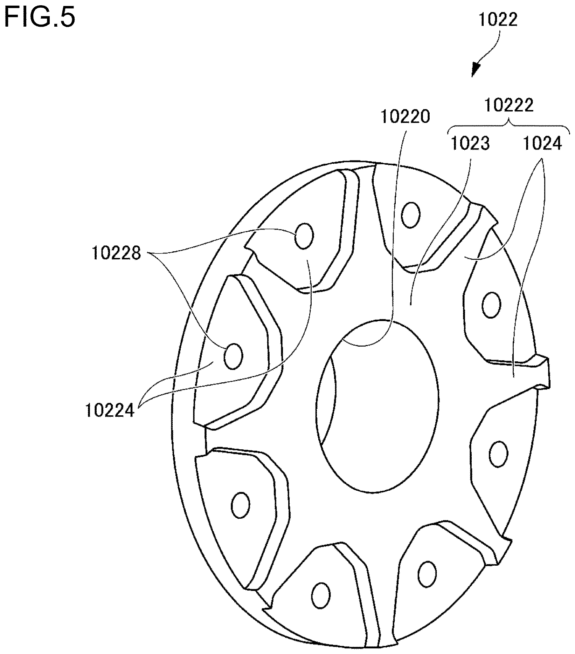

Fig. 5 is a perspective view illustrating the fixed die 1022 from the movable die 1020 side.

The fixed die 1022 has a pressing portion 10222 that abuts on the axial end surface 328 of the rotor core 32 around a recess 10220 in a center corresponding to the centering mechanism 1030. In the fixed die 1022, a recess 10224 recessed outward in the axial direction is formed in each region adjacent to the pressing portion 10222 in the circumferential direction as viewed in the axial direction. The recess 10224 has a function of forming the magnet end 630 (each island 632). That is, the recess 10224 forms the closed space S1 communicating with the magnet holes 321 and 322 between the recess and the axial end surface 328 of the rotor core 32 in the die clamping state. The pressing portion 10222 includes an annular portion 1023 on a center side and a radial portion 1024 extending to the radially outer side from the annular portion 1023. The recess 10224 is formed between the radial portion 1024 and the annular portion 1023 adjacent to each other in the circumferential direction.

The closed space S1 is a section where the magnet end 630 (each island 632) is formed, and has a form corresponding to the magnet end 630 (each island 632). That is, in the clamped state, the closed space S1 encloses the magnet holes 321 and 322 of the rotor core 32 and is separated into a plurality of portions in the circumferential direction. The number ("eight" in this example) of recesses 10224, which are provided separately, corresponds to the number of magnetic poles.

The fixed die 1022 includes one gate 10228 in each recess 10224. The gate 10228 is provided at a position corresponding to the gate mark 90 at a bottom of the recess 10224 (the recess 10224 corresponding to the island 632).

By using such a manufacturing apparatus 100, the bonded magnets 61 and 62 can be arranged (formed) on the rotor core 32 by the following manufacturing method.

First, the rotor core 32 having the shaft hole 320 and the magnet holes 321 and 322 is prepared, and the rotor core 32 is set in the mold device 102. At this time, the rotor core 32 is in a state of being centered by the centering mechanism 1030. When the rotor core 32 is set, the mold device 102 is opened (not illustrated).

Then, by closing the mold device 102, the closed space S1 communicating with the magnet holes 321 and 322 of the rotor core 32 is formed on one side in the axial direction of the rotor core 32. That is, the die clamping state illustrated in Fig. 4 is formed. When the die clamping state illustrated in Fig. 4 is formed, one gate 10228 at the bottom of the recess 10224 described above is positioned for each closed space S1.

Next, the magnet holes 321 and 322 are filled with a bonded magnet material (in a molten state) pressure-fed from a supply source (not illustrated) from the gate 10228 through the closed space S1. In this way, in the present embodiment, the bonded magnet material discharged from the gate 10228 is filled in each of the magnet holes 321 and 322 through the closed space S1.

Thereafter, the mold device 102 is opened, a molded product is taken out, and various post-treatments (for example, removal of a material portion corresponding to the gate 10228) are performed, and then, the step of arranging (forming) the bonded magnets 61 and 62 on the rotor core 32 is completed. Note that the gate mark 90 described above is formed by removing a material portion corresponding to the gate 10228.

In the bonded magnet material is configured to be filled in each magnet hole, the gate for injecting the bonded magnet material into the magnet hole has a diameter which is significantly smaller than a diameter of the magnet hole. In this case, a sectional area of a flow path at an outlet of the gate is remarkably increased. Therefore, when the bonded magnet material enters the magnet hole from the gate, the pressure is released, and the flow of the bonded magnet material tends to be turbulent. If the flow of the bonded magnet material becomes turbulent in the magnet hole, void defects may occur in the bonded magnet in the magnet hole, or the orientation inside the bonded magnet may collapse and the magnetic characteristics may be deteriorated.

In this regard, in the present embodiment, the bonded magnet material from the gate 10228 is filled in each of the magnet holes 321 and 322 through the closed space S1 as described above. The closed space S1 encloses the magnet holes 321 and 322 as viewed in the axial direction, that is, is significantly larger than the magnet holes 321 and 322. Therefore, in the present embodiment, the pressure is released in the closed space S1, and the flow of the bonded magnet material is prevented from becoming turbulent when the bonded magnet material enters the magnet hole from the gate. That is, it is possible to reduce the above-described disadvantages caused by the turbulence of the flow of the bonded magnet material in the magnet holes 321 and 322. This means that by providing the magnet end 630 described above, the above-described disadvantages caused by the turbulence of the flow of the bonded magnet material in the magnet holes 321 and 322 can be reduced.

In order to reliably exert such an effect, a thickness (axial dimension) of the closed space S1 is preferably larger than a width (see a width D1 in Fig. 2) of the magnet holes 321 and 322 in a direction intersecting a magnetic path of the rotor core 32. In the example illustrated in Fig. 2, the width D1 is a width in a direction substantially orthogonal to the magnetic path of the rotor core 32. In a case where the width of magnet holes 321 and 322 is not clear, a width in a direction perpendicular to a straight line or an approximate straight line defining a longitudinal direction of the magnet holes 321 and 322 may be used. In either case, by filling each magnet hole 321 and 322 with the bonded magnet material through the closed space S1 having such an axial dimension, it is possible to more reliably prevent the flow of the bonded magnet material from being turbulent when the bonded magnet material enters the magnet hole from the gate.

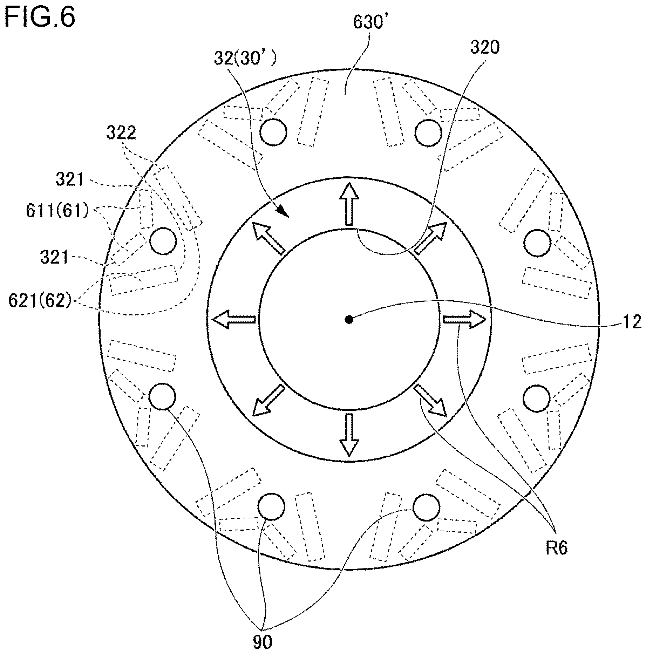

Next, the effect of the present embodiment will be further described in comparison with a comparative example with reference to Figs. 6 to 11 together with Fig. 4 described above.

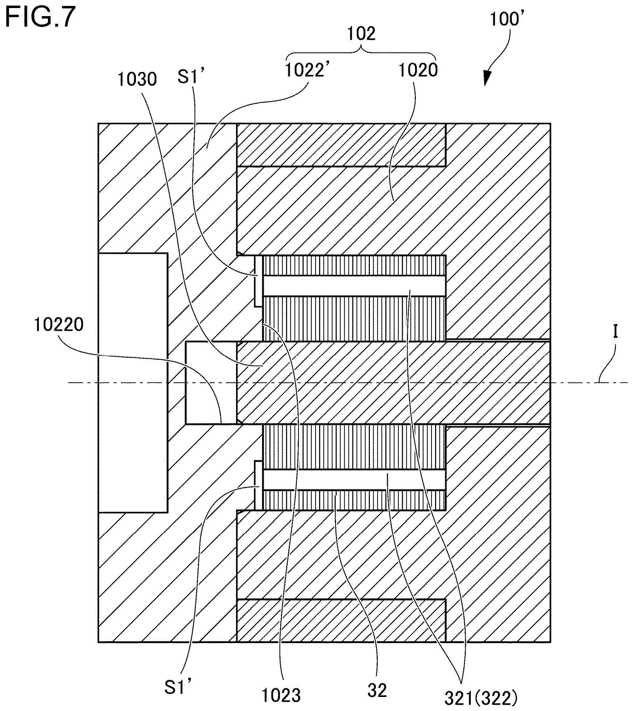

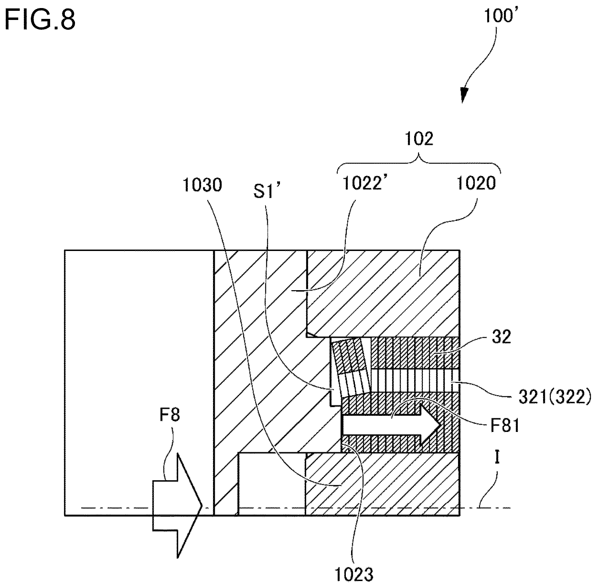

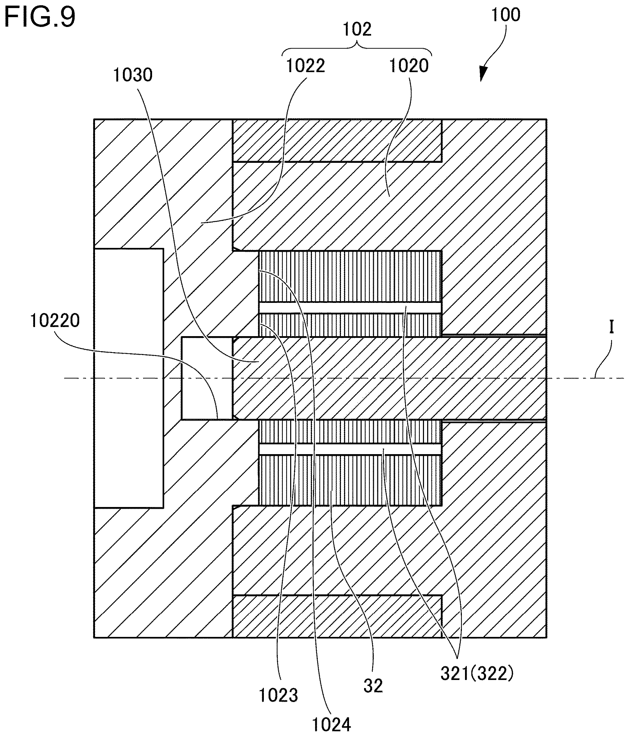

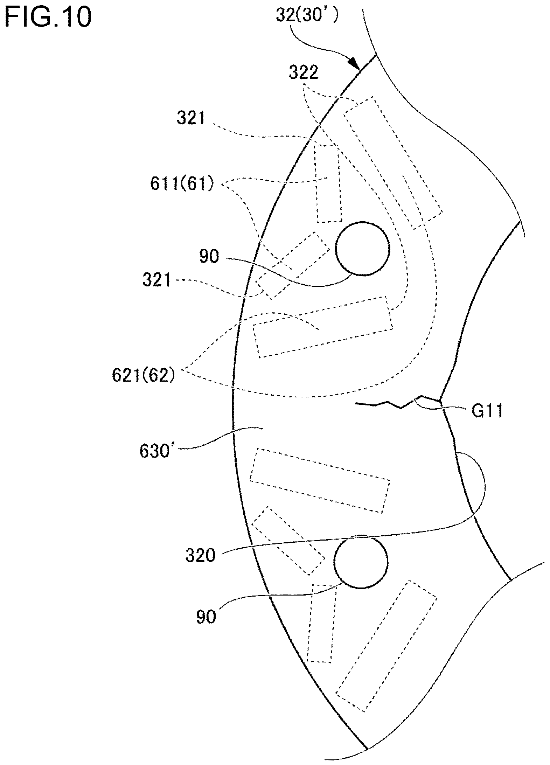

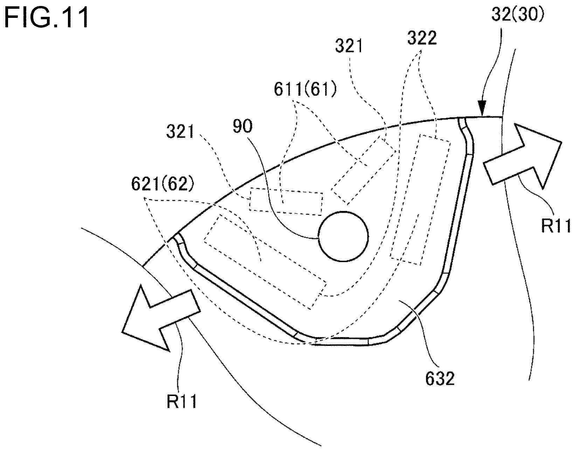

Fig. 6 is a plan view illustrating a configuration of a magnet end 630' in a rotor 30' according to a comparative example, and is a plan view to be compared with Fig. 3. Fig. 7 is a sectional view of a manufacturing apparatus 100' for manufacturing a configuration of the comparative example, and is a sectional view to be compared with Fig. 4 and Fig. 9 described later. Fig. 8 is an explanatory diagram of a problem occurring in the comparative example, and is a sectional view schematically illustrating a mode of a deformation of the rotor core occurring in the die clamping state. Fig. 9 is a sectional view similar to Fig. 4 described above (a sectional view taken along a plane passing through a central axis I), but unlike Fig. 4, is a sectional view taken along a plane not passing through the closed space S1 (a plane passing through the radial portion 1024 described above). Fig. 10 is an explanatory diagram of a crack that can occur in the comparative example. Fig. 11 is an explanatory diagram of solidification and shrinkage of the bonded magnet material during injection molding.

The comparative example is the same as the present embodiment in that the magnet end 630' includes the magnet holes 321 and 322 as viewed in the axial direction, but is different from the present embodiment in that the magnet end is not divided into a plurality of portions in the circumferential direction (that is, is continuous in the circumferential direction) as viewed in the axial direction.

In the comparative example, due to the above-described difference, the manufacturing apparatus 100' is different from the closed space S1 according to the present embodiment in that a closed space S1' corresponding to the closed space S1 according to the present embodiment is not divided into a plurality of portions in the circumferential direction (that is, is continuous in the circumferential direction). In this case, a fixed die 1022' according to the comparative example does not have the radial portion 1024 of the fixed die 1022 according to the present embodiment.

In such a comparative example, a volume of the closed space S1' is significantly larger than a volume of the closed space S1 according to the present embodiment. That is, in the comparative example, an amount of material for forming the magnet end (surplus portion), which is originally unnecessary from the viewpoint of not contributing to the torque characteristics of the motor 1, is larger than in the present embodiment. Therefore, in the present embodiment, as compared with such a comparative example, the amount of bonded magnet material used for each one rotor 30 can be reduced, and the cost can be reduced.

In such a comparative example, as in the present embodiment, the above-described disadvantages caused by the turbulence of the flow of the bonded magnet material in the magnet hole can be reduced, but there is a problem that the radially outer side of the rotor core 32 (the radially outer side of a steel plate on an axial end side) is easily deformed due to a die clamping force at the time of die clamping.

Specifically, as schematically illustrated in Fig. 8, the die clamping force (see a force F8 in Fig. 8) at the time of die clamping is applied only to the radial central portion (portion around the axial hole 320) of the entire axial end surface 328 of the rotor core 32 (see a force F81 in Fig. 8). Therefore, a portion that does not receive the die clamping force (a portion on the radially outer side) of the entire axial end surface 328 of the rotor core 32 is easily deformed to be warped outward in the axial direction as illustrated in Fig. 8. That is, the portion on the radially outer side of the steel plate on the axial end side is easily deformed to warp outward in the axial direction.

On the other hand, in the present embodiment, in the die clamping state, as illustrated in Fig. 9, the radial portion 1024 can press up to a portion on the radially outer side of the axial end surface 328 of the rotor core 32. As a result, it is possible to eliminate or reduce deformation of the rotor core 32 that occurs in the comparative example as illustrated in Fig. 8.

In such a comparative example, there is a problem that the bonded magnet material is easily broken at various places due to shrinkage (solidification and shrinkage) at the time of curing during injection molding. In particular, unlike common metals, the bonded magnet material has low toughness and has a significantly fragile property. Therefore, as in the comparative example, the magnet end 630' extending over a wide range over the entire circumference is likely to be broken at various places due to the solidification and shrinkage of the magnet end 630'. For example, at an edge in the radially inner side (see a portion indicated by an arrow R6 in Fig. 6) away from each gate 10228, due to fluidity of the bonded magnet material or the like, the amount of the bonded magnet material is insufficient, and minute recesses recessed to the radially outer side are likely to be generated. When such a recess is generated, stress concentration at the time of solidification and shrinkage occurs, and breakage or a crack starting from the recess is likely to occur. In Fig. 10, such a crack is schematically indicated as reference sign G11.

In this regard, in the present embodiment, as described above, the magnet end 630 is divided into a plurality of portions in the circumferential direction. Therefore, the recess is hardly generated, and the disadvantages (breakage at various places) generated in the comparative example can be eliminated or reduced.

Here, a mechanism of solidification and shrinkage of the bonded magnet material during injection molding is as follows. That is, since the bonded magnet material in the closed space S1 is restrained by the bonded magnet material in the magnet hole 321, the bonded magnet material shrinks from the position of the gate 10228 toward the magnet holes 321 and 322. In the present embodiment, the island 632, which is a breakage or an extra portion due to the solidification and shrinkage of the bonded magnet material during the injection molding, is restrained by the magnet holes 321 and 322 during manufacturing, and thus shrinks from the gate mark 90 toward the magnet holes 321 and 322. As a whole, a circumferential tensile force (see an arrow R11) acts on each island 632 around the gate 10228 as illustrated in Fig. 11.

In this regard, in the present embodiment, as described above, the island 632 is increased in width in the radial direction at a substantially central portion in the circumferential direction (see a dimension L3 in Fig. 3) as viewed in the axial direction. As a result, the width in the radial direction increases (no recess exists) at a portion (substantially central portion in the circumferential direction) where the stress concentration is likely to occur due to the force in the circumferential tensile force. It is therefore possible to eliminate or reduce the disadvantages (breakage at various places) generated in the comparative example.

In the present embodiment, as described above, the position of the gate mark 90 is set at or near a centroid of the outer shape of each island 632 as viewed in the axial direction. That is, the position of the gate 10228 is set at or near a centroid of an outer shape of the closed space S1 as viewed in the axial direction. As a result, stress generated in the solidification and shrinkage of the bonded magnet material is balanced, and breakage and a crack can be suppressed.

In the present embodiment, a corner of the outer shape of the island 632 may include a corner protruding to a side away from the gate mark 90 as viewed in the axial direction. In this case, there is no recess caused by the outer shape of the island 632, and the disadvantages (breakage at various places) generated in the comparative example can be eliminated or reduced.

Although each embodiment has been described in detail above, the present disclosure is not limited to a specific embodiment, and various modifications and changes can be made within the scope described in the claims. All or a plurality of the components of the above embodiment can be combined.

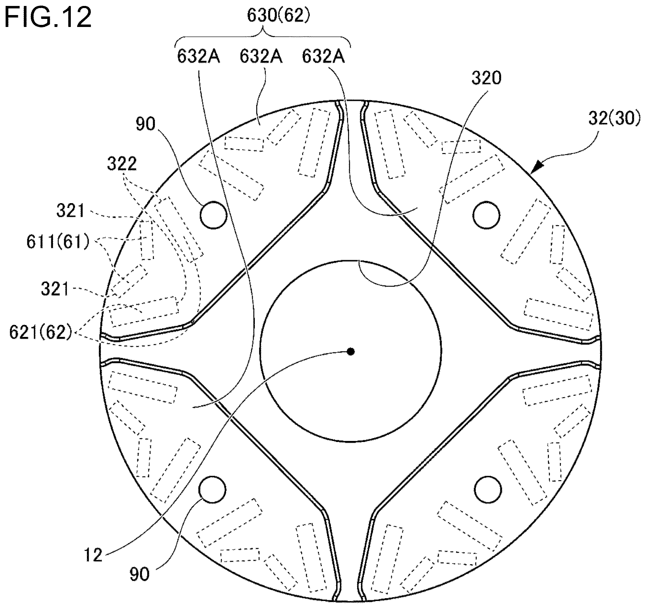

For example, in the above embodiment, one island 632 is provided for each magnetic pole so as to have a well-balanced arrangement according to the magnetic pole, but the present invention is not limited to this example. For example, as illustrated in Fig. 12, one island 632A may be provided for every two magnetic poles.

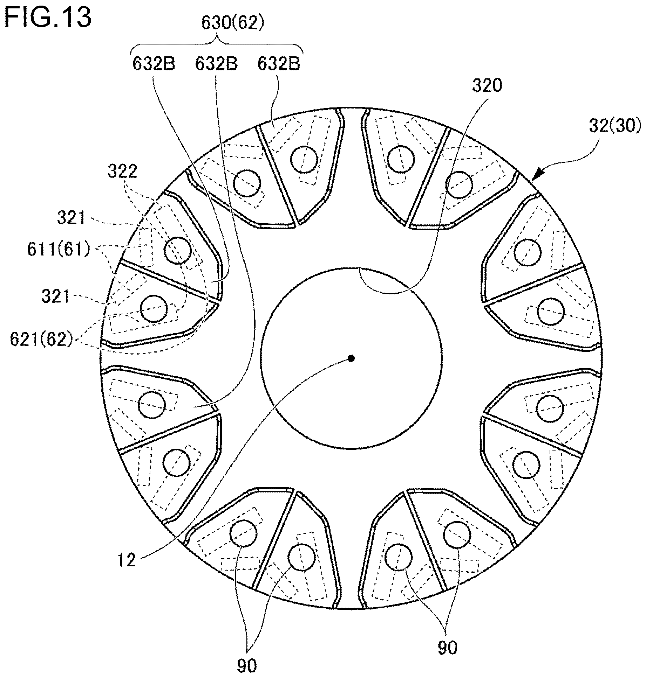

In the above embodiment, each island 632 is separated at a circumferential position of the q-axis. However, instead of or in addition to this position, each island 632 may be separated at another circumferential position. For example, as illustrated in Fig. 13, in addition to the circumferential position of the q-axis, an island 632B separated at the circumferential position of the d-axis may be provided. However, it should be noted that, if the plurality of islands 632 is provided in one magnetic pole, there is a possibility that the magnet holes 321 and 322 cannot be enclosed at a portion where an interval between the magnet holes 321 and 322 is narrow. In particular, recently, the interval between the magnet holes tends to be narrowed in order to improve motor performance.

In the above embodiment, the magnet end 630 is magnetized, but is not required to be magnetized. That is, the magnet end 630 is only required to be a cured product (magnet material portion) of a bonded magnet material, and whether magnetized is arbitrary.

In the above embodiment, the gate can be disposed efficiently by assigning one gate 10228 to each closed space S1, but a plurality of gates 10228 may be assigned to each closed space S1. In this case, similarly, the plurality of gates 10228 may be positioned at or near the centroid of the corresponding closed space S1. For example, when two gates are near the centroid, one gate may be at the centroid, the other gate may be near the centroid, or both gates may be near the centroid.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A rotor (30) for a rotary electric machine, the rotor (30) comprising:
a core including a shaft center and a magnet hole (321, 322); and
a magnet material portion formed by injecting an injection molding material containing a magnetic powder into the magnet hole (321, 322), wherein
the magnet material portion includes
a magnet body (611, 621) inside the magnet hole (321, 322), and
a material end outside the magnet hole (321, 322), and
the material end encloses the magnet hole (321, 322) and is separated into a plurality of portions in a circumferential direction as viewed in an axial direction.

2. The rotor (30) for a rotary electric machine according to Claim 1, wherein
the magnet material portion is disposed so as to form a plurality of magnetic poles along the circumferential direction, and
the material end is separated between the magnetic poles adjacent in the circumferential direction.

3. The rotor (30) for a rotary electric machine according to Claim 2, wherein
the material end is separated one by one for each of the magnetic poles, and
one island (632) of the material end separated encloses a whole of the magnet hole (321, 322) of the magnetic pole corresponding as viewed in the axial direction.

4. The rotor (30) for a rotary electric machine according to any one of Claims 1 to 3, wherein one gate mark (90) formed by injection molding exists for each one island (632) of the material end separated.

5. The rotor (30) for a rotary electric machine according to any one of Claims 1 to 3, wherein one or more gate marks (90) formed by injection molding are positioned for each one island of the material end separated, and the one or more gate marks (90) are located at or near a centroid of the each one island (632) as viewed in the axial direction.

6. The rotor (30) for a rotary electric machine according to any one of Claims 3 to 5, wherein the island (632) has a form in which a width in a radial direction increases at a substantially central portion in the circumferential direction as viewed in the axial direction.

7. The rotor (30) for a rotary electric machine according to any one of Claims 1 to 6, wherein a length of the material end in the axial direction is larger than a width of the magnet hole (321, 322) in a direction intersecting a magnetic path of the core.

8. A method of manufacturing a rotor (30) for a rotary electric machine, the method comprising:
preparing a core having a shaft center and a magnet hole (321, 322);
forming a closed space (S1) that communicates with an inside of the magnet hole (321, 322) of the core on one side in an axial direction of the core; and
filling a material for injection molding into the magnet hole (321, 322) of the core through the closed space (S1), the material containing a magnetic powder, wherein
the closed space (S1) encloses the magnet hole (321, 322) and is separated into a plurality of portions in a circumferential direction as viewed in the axial direction.

9. The method of manufacturing a rotor (30) for a rotary electric machine according to Claim 8, wherein
the filling of the material for injection molding is performed in a state in which an orientation magnetic field in which a plurality of magnetic poles is formed along a circumferential direction is formed, and
the closed space (S1) is separated between the magnetic poles adjacent in the circumferential direction.

10. The method of manufacturing a rotor (30) for a rotary electric machine according to Claim 8 or 9, wherein the filling of the material for injection molding includes positioning one gate (10228) for injection molding for each one space portion of the closed space (S1) separated.

11. The method of manufacturing a rotor (30) for a rotary electric machine according to Claim 10, wherein the gate (10228) for injection molding is positioned at or near a centroid of the space portion corresponding as viewed in the axial direction.

12. The method of manufacturing a rotor (30) for a rotary electric machine according to Claim 10 or 11, wherein the space portion has a form in which a width in a radial direction increases at a substantially central portion in the circumferential direction as viewed in the axial direction.

13. The method of manufacturing a rotor (30) for a rotary electric machine according to any one of Claims 8 to 12, wherein a length of the closed space (S1) in the axial direction is larger than a width of the magnet hole (321, 322) in a direction intersecting a magnetic path of the core.
